# EUROPEAN PATENT APPLICATION

(11) **EP 2 042 033 A2**
(43) Date of publication of application: **01.04.2009**
(21) Application number: 08388031.0
(22) Date of filing: 15.09.2008
(51) Int. Cl.: A01K 5/00, A01D 90/00, A01F 29/00

(54) **A feed magazine, wherein feed is advanced on a conveyor belt to a tearing-up section**

(30) Priority: 28.09.2007 DK 200701402; 25.01.2008 DK 200800097
(71) Applicant: Skiold Mullerup A/S, 5540 Ullerslev (DK)
(72) Inventor: Poulsen, Carsten, 5540 Ullerslev (DK)
(74) Representative: Larsen, Hans Ole

(57) **Abstract**

A feed magazine (1) contains an inclined conveyor belt which is driven by motors (14, 14a). The conveyor belt is formed by two sets of chains (12, 12a), where each set of chains has transverse runners (13) for advancing feed blocks (2, 2a, 2b) to a tearing-up section (8). The feed magazine has an upper fixed bottom (42) and a lower fixed bottom (43), where the feed blocks are advanced on the upper bottom (42), while excess feed, which is torn up in the tearing-up section (8), is returned on the lower bottom (43), whereby waste feed is not transferred to the surroundings.

To ensure that the forces affecting the chains do not exceed a permitted value, e.g. when their direction of rotation is changed, a check lock in the form of a rocker link (28) is inserted, which is connected via a yoke (21) to the chains, said rocker link being locked to a locking rod (26) in case of overloading.

In addition, the motors (14, 14a), which drive the chains (12, 12a), are connected via a motor chain (17) to a tightening wheel (36a), which, in case of too great impact forces on the chains and subsequent possible destruction of the check lock, activates an electric switch (32) of a protection device, which interrupts the electric current to the motors of the feed magazine.

## Description

The invention relates to a feed magazine comprising a conveyor belt which is driven by at least one motor, wherein the conveyor belt advances feed blocks to a tearing-up section, wherein the conveyor belt is formed by a plurality of sets of chains which extend longitudinally of the feed magazine, and wherein a plurality of runners are arranged between two adjacent chains, said runners sliding on an upper, fixed bottom in the feed magazine during the forward movement of the conveyor belt.

A prior art feed magazine is known e.g. from DK 174333. In this system, feed blocks are transferred individually from a feed magazine to a tearing-up section, where the feeding of feed blocks takes place on a conveyor belt at the bottom of the feed magazine.

In this system, the feed magazine and the tearing-up roller are suspended from a running rail, so that feed which is torn up by the tearing-up roller may be transferred to spreader plates, but there is a limit to how large amounts of feed can be suspended from a running rail, which means that a good deal of preparation is required each time feed is to be supplied to the suspended feed magazine.

Therefore, it is desirable to be able to handle larger amounts of feed at a time, which in turn makes demands on the power which the conveyor belt is to provide when advancing feed.

Another prior art feed magazine is known from US 3173563 A. This system describes a feed vehicle, which comprises a chain conveyor having two sets of chains, where rails are secured between these chains. To prevent feed from dropping out of the vehicle, a fixed bottom is arranged between upper and lower runs of the chain conveyor. The chain conveyor is driven by a drive shaft, which is connected with a power take-off shaft from a tractor. Finally, the feed vehicle is equipped with a tearing-up mechanism comprising a roller having spikes.

The drawback of this feed magazine is that feed which is advanced in the feed magazine may unintentionally drop below this, thereby causing pollution.

Accordingly, it is an object of the invention to provide a feed magazine which is capable of handling larger amounts of feed under the best possible hygienic conditions and is capable of advancing the feed without any waste.

The object of the invention is achieved by a feed magazine of the type defined in the introductory portion of claim 1, which is characterized in that the conveyor belt with runners is directed back below the upper, fixed bottom along a lower, fixed bottom, which is extended by a curved screen at the end where feed is supplied to the feed magazine, said curved screen being adapted to guide residual feed up toward the upper, fixed bottom.

It is ensured in this manner that sufficient propulsion force may be established in the feed magazine. In addition, the runners, which slide on the bottom, will ensure that all the feed in the feed magazine is advanced, and that all the feed is advanced correctly, without any waste below the feed magazine.

To additionally ensure sufficient and symmetric propulsion of feed in the feed magazine, it is expedient, as stated in claim 2, that the feed magazine contains two sets of chains, where each set of chains is driven by its respective motor or by two motors on the same shaft.

To ensure a good operation of the feed magazine during a long time, it is moreover expedient, as stated in claim 3, that a tightening section in the form of a pressure cylinder is inserted into each set of chains, and, as stated in claim 4, that the two sets of chains are connected with each other by means of a triangular, movable yoke, wherein the triangle is an isosceles triangle, such that the chains extending down along the sides of the feed magazine are connected with the end points of the base line of the triangle.

In this manner, the sets of chains will always have the proper tightening. Further, the forces affecting the chains will be distributed symmetrically.

These advantages are enhanced further, if, as stated in claim 5, the yoke is connected with the pressure cylinders at the end points of the base line of the triangle, and, as stated in claim 6, the chains are connected with a movable shaft, which is connected with the base line of the triangular yoke via pressure rods.

In order to prevent the chains from being overloaded, which may happen if their direction of drive is changed, so that feed is to be returned to the feed magazine, it is expedient, as stated in claim 7, that the yoke is connected with a check lock in the form of a rocker link having a first pin which is mounted on the yoke, and a second pin which is connected with the first pin by means of a torsional spring, and that the rocker link has a third pin, said second and third pins being supported against a locking rod, as, in case of overloading, the rocker link will lock the chain propulsion owing to pressure on the locking rod.

For optimum control of the force which is transferred from the motors to the set of chains, it is moreover expedient, as stated in claim 8, that the sets of chains are driven by a drive shaft, wherein the drive shaft is supplied with torque from a gear on the motor, as a chain wheel is connected with the gear, and wherein the chain wheel is connected via a motor chain with a second chain wheel, which is connected with the drive shaft. In this manner, in addition to control of the power transfers to the chains, an additional overload protection may be established, which protects the rocker link, if, as stated in claim 9, a tightening wheel is connected with the motor chain, and the tightening wheel is secured to a displaceable main frame, said main frame having a groove in which a guide is arranged, and, as stated in claim 10, if the main frame is spring-biased by means of a spring which is arranged in a cylinder, wherein the spring is movable in the cylinder in dependence on the pressure of the motor chain on the tightening wheel, and wherein an electric switch interrupts the current to the motor when the main frame has been displaced a distance S, corresponding to a predetermined force on the motor chain.

A further expedient embodiment of the invention is, as stated in claim 11, that an angular block holder with a face having pins supports the rearmost feed block in the feed magazine, which means that the risk of feed blocks tumbling rearwards in the feed magazine, which is typically inclined in operation, is eliminated.

The invention will now be explained more fully with reference to the drawing, in which
- fig. 1: shows a feed magazine according to the invention,
- fig. 2: shows the feed magazine of fig. 1, seen from above,
- figs. 3, 3A: show details of the conveyor belt in the feed magazine according to the invention,
- figs. 4, 4A: show details of the coupling a motor to the conveyor belt in the feed magazine according to the invention,
- fig. 5: shows the feed magazine seen from behind, while
- fig. 5A: shows details of the coupling of the chains of the conveyor belt in the feed magazine according to the invention.

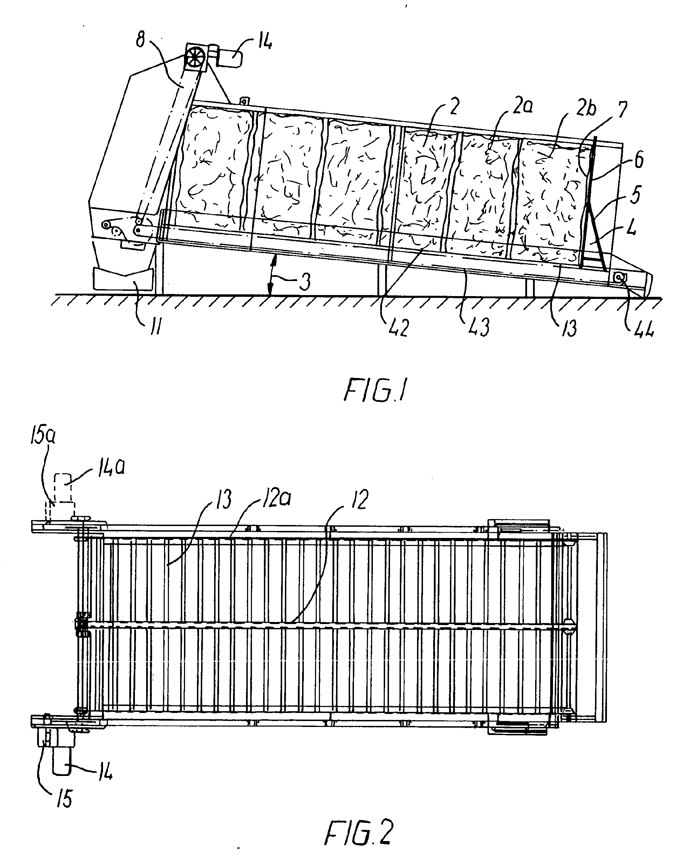

In fig. 1, the numeral 1 designates a feed magazine according to the invention as a whole. As will be seen, the feed magazine is disposed obliquely at an angle 3, which may e.g. be up to 30 degrees. Feed blocks designated 2, 2a, 2b in the figure are arranged inside the feed magazine.

These feed blocks may each have a weight of about 2 tons, which, of course, requires a good deal of motor power when they are to be advanced obliquely up along a conveyor belt inside the feed magazine to a tearing-up section 8, which is driven by a motor 14.

This tearing-up section is known per se and will therefore not be described any further, but it should be noted that the feed torn in the tearing-up section is advanced to a mixer 11, which, too, is known per se.

As will be seen in fig. 2 in particular, the conveyor belt is formed by two sets of chains, where the one set is designated 12, 12a. The chains 12, 12a are connected in pairs with each other by transverse runners 13.

The conveyor belt is driven by at lest one, but preferably two motors 14, 14a, to which gears 15, 15a are coupled, as will be explained later.

The conveyor belt is directed up long a fixed bottom 42 and back below an underlying, fixed bottom 43. The underlying, fixed bottom 43 is terminated by a curved screen 44 at the entry into the feed magazine.

As will additionally be seen in fig. 1, the rearmost feed block is supported by a block holder 4, which has an inclined brace 5 and a plate 6, which has pins 7 on the surface facing inwards toward the feed blocks.

It will then be explained how feed blocks are treated in the feed magazine.

When the conveyor belt is put into operation, feed blocks are moved up toward the tearing-up section 8 together with the block holder 4, which currently supports the rearmost feed block 2b.

The fixed bottom, on which the runners 13 slide, ensures that no feed drops out and down below the area where the feed magazine is disposed, as the runners advance feed on the fixed bottom 42.

If a little feed should drop out at the tearing-up section 8, it will be returned by the runners 13 of the conveyor belt along the underlying, fixed bottom 43 and reach the curved screen 44, from which the feed will be returned to the feed magazine.

As will be appreciated, the feed magazine according to the invention provides a feed magazine which is capable of handling large amounts of feed and with a high hygienic level.

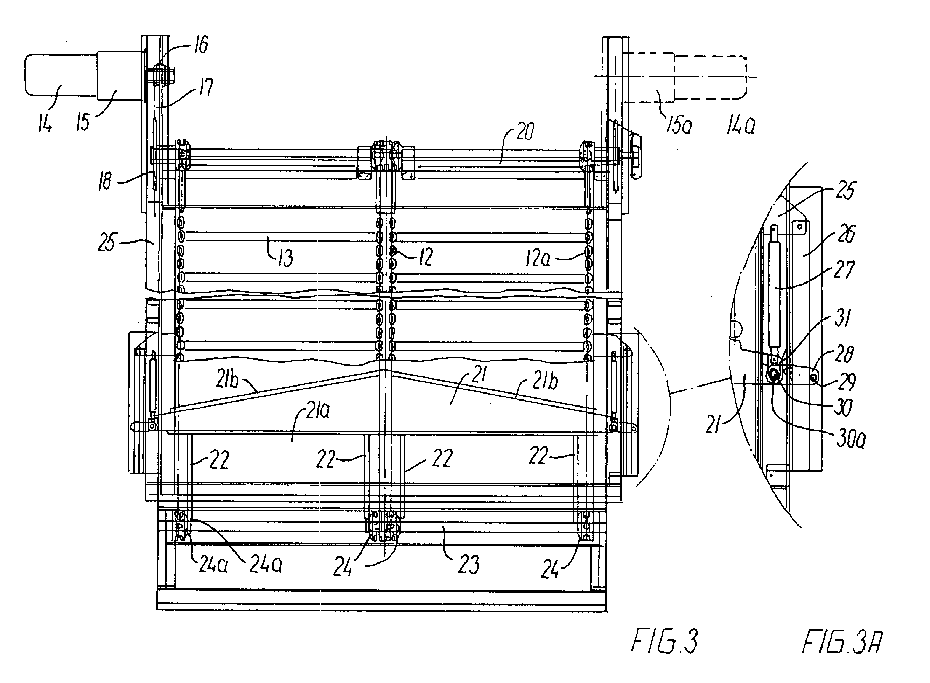

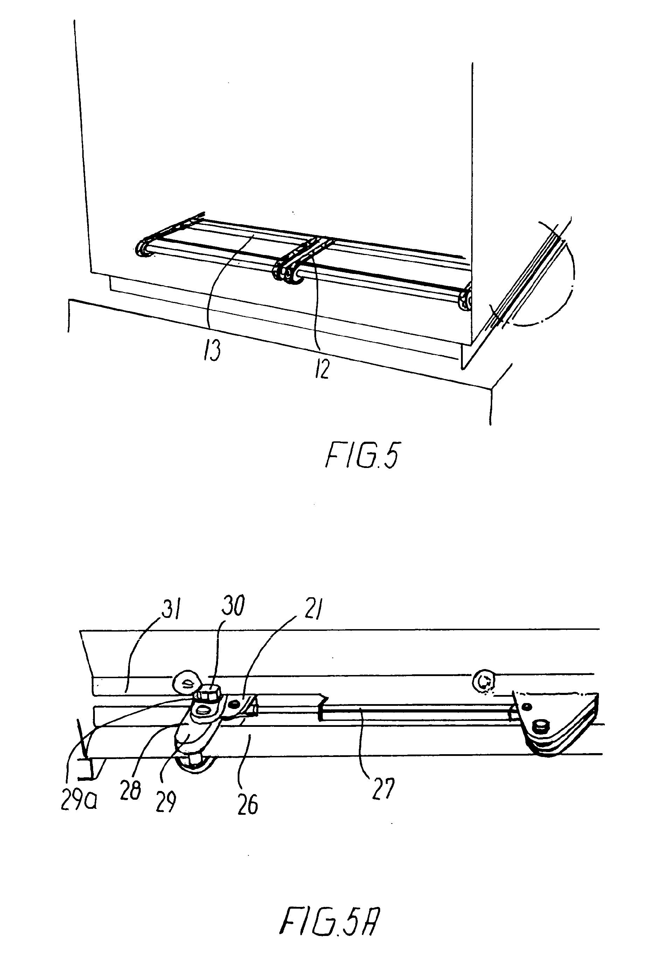

With reference now to figures 3, 3A, 5 and 5A, it will be explained more fully how the conveyor belt is constructed.

Figures 3 and 5 also show the chains 12, 12a with runners 13, which are driven by the motors 14, 14a having gears 15, 15a.

To ensure that the chains always have the proper tightening, pressure cylinders 27, such as gas cylinders or hydraulic cylinders, are inserted on each side of the feed magazine. These pressure cylinders are secured at their one end to a fix point in a bottom frame 25 in the feed magazine.

Their opposite end is connected with a movable yoke 21, which, geometrically, is formed by an isosceles triangle having a base line 21 a and catheti 21 b. The pressure cylinders 27 are coupled to the end points of the base line.

One end of pressure rods 22 is coupled to the base line of the movable yoke 21 perpendicularly to it, while their opposite end is coupled to bearing bushings 24a having a tightening wheel 24, which is in turn secured to a movable shaft 23.

With this set-up, it will always be ensured that the chains have the proper tightening, irrespective of how much feed is advanced in the feed magazine, since the forces acting on the chains are sensed by the pressure cylinders, which may advantageously be gas or hydraulic cylinders, as mentioned, which, in case of variations, cause the shaft 23 to move via the yoke 21 and the pressure rods 22 in one or the other direction.

Normally, the chains in the feed magazine run in one direction, so that the fed blocks are introduced into the feed magazine. However, it is possible to cause the chains to run in the opposite direction, if, for some reason, it is desired to move residual feed back out of the feed magazine.

In this connection, it is important to restrict the pressure impacts on the pressure cylinders 27, since, otherwise, these will have to resist impact forces which are twice as great as the forces in the chains 12, 12a, which may happen when the chains are caused to run in the opposite direction of the direction of propulsion.

Therefore, to protect the pressure cylinders, a check lock is arranged, which, cf. fig. 3A, is formed by a rocker link 28 having two fixed pins 29, 30 which engage a locking rod 26, said fixed pins having a clearance of a few millimetres to the locking rod. The one fixed pin 30 is connected with a movable pin 30a via a torsional spring 31.

If too great forces occur in the chains 12, 12a, e.g. in that these are caused to run in the opposite direction of the normal direction of advancement, it is possible, as mentioned, that greater forces occur than those which the pressure cylinders are intended to absorb. This will be prevented, since, in case of too great impact forces, the two fixed pins 29, 30 of the rocker link will get a greater grip of the locking rod 26, thereby preventing the pressure cylinders from being overloaded.

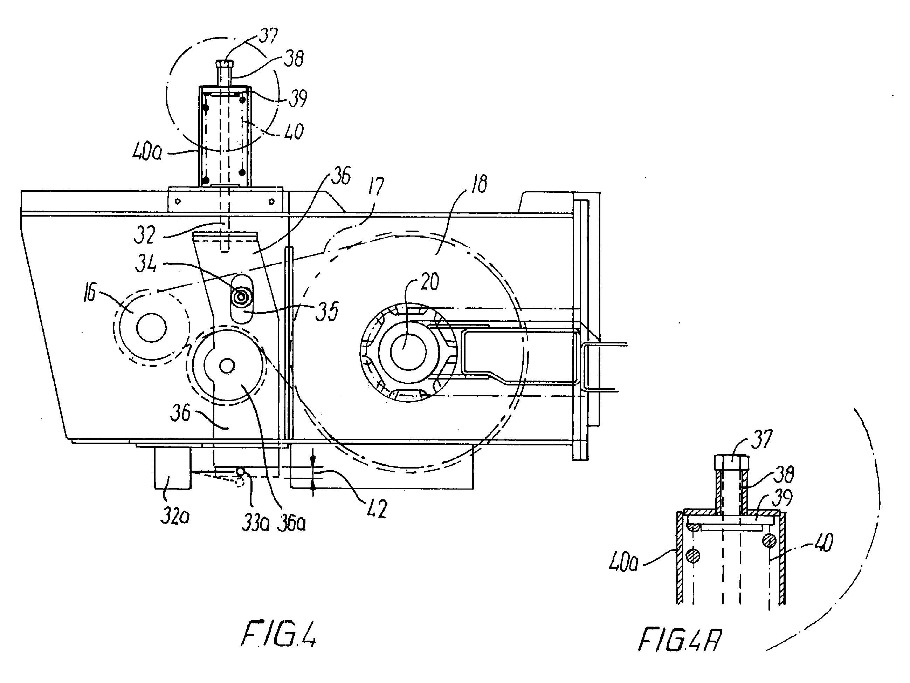

If the chains with filled feed magazine are now erroneously caused to move the feed blocks back out of the feed magazine, the forces on the rocker link 28 and the locking rod 26 may become so great that the check lock is destroyed. Therefore, a protection device is provided, constructed in the manner which will be described now with reference to figures 4 and 4A.

In these figures, the numeral 17 designates a motor chain which extends from the gear 15 via a chain wheel 16 on the gear to a chain wheel 18 on a drive shaft 20 for the chains 12, 12a.

In addition, a tightening wheel 36a is provided for the motor chain 17, said tightening wheel being suspended from a displaceable main frame 36, which has a groove 35 in which a guide 34 is arranged.

The main frame 36 is connected at the top with a spindle 32, which is passed into a cylinder 40a accommodating a spring 40, which engages a guide disc 39 at the top in the cylinder. At the top, the cylinder 40a is terminated by a spacer bushing 38 which supports the head 37 of the spindle.

An electric switch 32a is arranged below the main frame 36 and is adapted to interrupt the current to the motor 14, when the main frame 36 activates it by touching a rocker arm 33a, which, when being displaced a small distance, shown at 42, will interrupt the current to the motor 14.

The protection device operates in the following manner.

If the motor chain 17 is subjected to too great forces, the tightening wheel 36a, when it is affected by greater forces than the spring 40, will move he main frame downwards, so that it contacts the rocker arm 33a of the switch 32a, which will subsequently interrupt the current to the motor 14.

Thus, the invention provides a feed magazine which is capable of handling large amounts of feed under optimal hygienic conditions and with incorporated protection features, which protect the mechanical parts of the feed magazine as well the staff who operate the feed magazine, as incorrect operation will trigger an alarm and stop the feed magazine via interruption of the current to it.

## Claims

1. A feed magazine (1), comprising a conveyor belt which is driven by at least one motor (14, 14a), wherein the conveyor belt advances feed blocks (2, 2a, 2b) to a tearing-up section (8), wherein the conveyor belt is formed by a plurality of sets of chains (12, 12a) which extend longitudinally of the feed magazine (1), and wherein a plurality of runners (13) are arranged between two adjacent chains, said runners sliding on an upper, fixed bottom (42) in the feed magazine during the forward movement of the conveyor belt,
**characterized in that** the conveyor belt with runners (13) is directed back below the upper, fixed bottom (42) along a lower, fixed bottom (43), which is extended by a curved screen (44) at the end where feed is supplied to the feed magazine, said curved screen being adapted to guide residual feed up toward the upper, fixed bottom (42).

2. A feed magazine according to claim 1, **characterized in that** the feed magazine contains two sets of chains, wherein each set is driven by its respective motor (14, 14a) or by two motors on the same shaft.

3. A feed magazine according to claims 1 - 2, **characterized in that** a tightening section in the form of a pressure cylinder (27), such as a gas or a hydraulic cylinder, is inserted into each set of chains.

4. A feed magazine according to claim 2, **characterized in that** the two sets of chains are connected with each other by means of a triangular, movable yoke (21), said triangle being an isosceles triangle, such that the chains extending along the sides of the feed magazine are connected with the end points of the base line of the triangle.

5. A feed magazine according to claim 4, **characterized in that** the yoke (21) is connected with the pressure cylinders (17) at the end points of the base line of the triangle.

6. A feed magazine according to claims 3 - 5, **characterized in that** the chains are connected with a movable shaft (23), which is connected with the base line of the triangular yoke via pressure rods (22).

7. A feed magazine according to claims 4 - 5, **characterized in that** the yoke is connected with a check lock in the form of a rocker link (28) having a first pin (30a) which is mounted on the yoke, and a second pin (30) which is connected with the first pin (30a) by means of a torsional spring (31), and that the rocker link has a third pin (29), said second and third pins being supported against a locking rod (26).

8. A feed magazine according to claims 1 - 7, **characterized in that** the sets of chains are driven by a drive shaft (20), wherein the drive shaft is supplied with torque from a gear (15) on the motor (14), as a chain wheel (16) is connected with the gear (15), and wherein the chain wheel (16) is connected via a motor chain (17) with a second chain wheel (18), which is connected with the drive shaft (20).

9. A feed magazine according to claim 8, **characterized in that** a tightening wheel (36a) is connected with the motor chain (17), and that the tightening wheel (36a) is secured to a displaceable main frame (36), said main frame having a groove (35) in which a guide (34) is arranged.

10. A feed magazine according to claims 8 - 9, **characterized in that** the main frame (36) is spring-biased by means of a spring (40) which is arranged in a cylinder (40a), wherein the spring may be moved in the cylinder in dependence on the pressure of the motor chain (17) on the tightening wheel (36a), and wherein an electric switch (32a) interrupts the current to the motor when the main frame (36) has been displaced a distance (S) corresponding to a predetermined force on the motor chain (17).

11. A feed magazine according to claims 1 - 10, **characterized in that** an angular block holder (3a) with a face (38) having pins (39) supports the rearmost feed block in the feed magazine.
